# EUROPEAN PATENT SPECIFICATION

(11) **EP 4 546 477 B1**
(45) Date of publication and mention of the grant of the patent: **28.10.2026**
(21) Application number: 23907422.2
(22) Date of filing: 13.11.2023
(51) Int. Cl.: H01M 10/04, B65H 23/032, B65H 23/04, B65H 23/182, B65H 16/02

(54) **UNWINDING DEVICE FOR MANUFACTURING SECONDARY BATTERY AND SECONDARY BATTERY MANUFACTURING SYSTEM INCLUDING THE SAME**
ABWICKELVORRICHTUNG ZUR SEKUNDÄRBATTERIEHERSTELLUNG UND SEKUNDÄRBATTERIEHERSTELLUNGSSYSTEM DAMIT
DISPOSITIF DE DÉROULEMENT POUR FABRICATION DE BATTERIE SECONDAIRE ET SYSTÈME DE FABRICATION DE BATTERIE SECONDAIRE LE COMPRENANT

(30) Priority: 23.12.2022 KR 20220182923
(43) Date of publication of application: 30.04.2025
(73) Proprietor: LG Energy Solution, Ltd., Seoul 07335 (KR)
(72) Inventor: GWON, Yeong-Tae, Daejeon 34122 (KR)
(74) Representative: Goddar, Heinz J.
(86) International application number: PCT/KR2023/018197
(87) International publication number: WO 2024/136136

(56) References cited:
- CN-A- 114 249 155
- JP-A- 2018 088 410
- KR-A- 20150 025 381
- KR-A- 20150 033 260
- KR-A- 20160 149 794
- KR-A- 20220 090 984
- KR-B1- 101 654 641

## Description

### TECHNICAL FIELD

The present disclosure relates to an unwinding device for manufacturing a secondary battery and a secondary battery manufacturing system including the same, and more specifically, to an unwinding device for manufacturing a secondary battery capable of minimizing deformation of a coating substrate during the unwinding process in a roll-to-roll process for manufacturing a secondary battery, and a secondary battery manufacturing system including the same.

The present application claims priority to Korean Patent Application No. 10-2022-0182923 filed on December 23, 2022 in the Republic of Korea.

### BACKGROUND ART

In general, a secondary battery refers to a battery that can be repeatedly charged and discharged, such as a lithium-ion battery, a lithium polymer battery, a nickel cadmium battery, a nickel hydrogen battery, a nickel zinc battery, and the like. Such a secondary battery may be manufactured by accommodating an electrode assembly including a positive electrode and a negative electrode stacked on each other with an insulating separator interposed therebetween, and an electrolyte material in various types of cases, and then sealing the corresponding case.

In addition, the electrodes and separators of a secondary battery may be manufactured using a roll-to-roll process. That is, while unwinding and transferring a strip-shaped substrate wound in a roll shape, a coating process, a drying process, a roll pressing process, a slitting process, and a notching process may be continuously performed on the corresponding substrate in an in-line manner. In this roll-to-roll method, winding and unwinding processes may be performed for each corresponding process.

In particular, a process of unwinding the electrode reel on which the processed substrate is wound after the slitting process is required to perform the notching process. In this process, the winding amount of the electrode (or substrate, semi-processed coating substrate, hereinafter collectively referred to as coating substrate) wound on the electrode reel inevitably decreases as time goes by, and the movement angle of the coating substrate (or the approach angle of the substrate facing toward the transfer roller) moving from the electrode reel to the transfer roller is bound to change. If the movement angle of the unwound coating substrate is changed in this way, the degree of bending of the coating substrate engaged with the transfer unit is changed, which may result in a problem that causes deformation of the coating substrate. That is, based on any one transfer roller, the degree of bending formed by the discharged substrate and the substrate facing toward the transfer roller from the electrode reel may be increased. In particular, this phenomenon tends to intensify on the first transfer roller. This bending phenomenon increases the possibility of creating wrinkles on the electrode uncoated portion, and the wrinkles may prevent the tab from being positioned uniformly on the electrode uncoated portion, thereby causing folding, damage, and defects of the tab in the subsequent notching process. The known prior art includes document CN 114 249 155 A showing an unwinder for a material of a bulletproof vest. The position of the unwinder is corrected in the cross directions. Document KR 2022 0090984 A discloses an unwinder of a metal lead in secondary battery manufacturing process. The unwinder position is corrected in order to reduce pressure of the metal lead delivered to flattening process.

### DISCLOSURE

### Technical Problem

The present disclosure is designed to solve the problems of the related art, and therefore the present disclosure is directed to providing an unwinding device for manufacturing a secondary battery capable of minimizing deformation of the coating substrate by reducing the change in the movement angle of the coating substrate moving from the unwinder to the first transfer roll, and a secondary battery manufacturing system including the same.

Technical problems to be solved by the present disclosure are not limited to the above-described problems, and other problems not mentioned herein may be clearly understood by those skilled in the art from the following description of the present disclosure.

### Technical Solution

An unwinding device for manufacturing a secondary battery according to the present disclosure for solving the above-described problem includes an unwinder unwinding a coating substrate wound in a roll shape by rotating it around a rotation shaft; a transfer unit including a first transfer roll disposed closest to the unwinder; and a correction unit provided on the rotation shaft and correcting the position of the rotation shaft with respect to the first transfer roll.

The correction unit may move the position of the rotation shaft in the first direction so that the entry angle of the coating substrate formed from the first transfer roll to the outer peripheral surface of the coating substrate wound on the unwinder is formed within a preset range.

The unwinding device for manufacturing a secondary battery may further include a sensor unit sensing the distance to the outer peripheral surface of the electrode reel, which is the wound coating substrate.

The sensor unit may sense the thickness of the wound coating substrate by sensing the distance of the outer peripheral surface of the electrode reel that changes while the coating substrate is being unwound.

The correction unit may further include a lifting frame; and an up/down driving unit connected to the lifting frame to drive the rotation shaft up/down in the first direction.

The lifting frame may be provided with a hub bearing to which the rotation shaft is rotatably coupled.

The unwinder may further include a support frame, and a long hole may be formed in the support frame so that the rotation shaft is moved up/down.

The sensor unit may be provided in the support frame.

The sensor unit may measure the time of flight of the light reflected by being irradiated to the outer peripheral surface of the electrode reel.

The up/down driving unit may be a pneumatic or hydraulic cylinder.

According to another embodiment, the unwinding device for manufacturing a secondary battery may further include a transfer roll correction unit that corrects the position of the transfer unit in the second direction.

Here, the transfer roll correction unit may include a correction rod rotatably connected to the first transfer roll; and a rod driving unit that drives the correction rod forward or backward in the second direction.

In addition, according to the present disclosure, a secondary battery manufacturing system including an unwinding device for manufacturing a secondary battery described above may be provided.

### Advantageous Effects

According to one aspect of the present disclosure, the rotation shaft of the unwinder with respect to the transfer unit may be corrected even if the winding amount of the coating substrate wound on the unwinder is reduced, thereby minimizing deformation of the coating substrate by reducing the change in the movement angle of the coating substrate moving from the unwinder to the first transfer roll.

In addition, according to one aspect of the present disclosure, while the wound coating substrate is being unwound, the sensor unit may move the rotation shaft in response to the winding amount of the coating substrate, thereby minimizing the degree of bending formed by the discharged substrate and the substrate facing toward the transfer roller from the electrode reel based on the first transfer roll, and accordingly, folding, damage, and defects of the tab during the notching process may be reduced.

The effects of the present disclosure are not limited to the above-described effects, and other effects not mentioned herein may be clearly understood by those skilled in the art from this specification and the accompanying drawings.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a view schematically showing a side portion of an unwinding device for manufacturing a secondary battery according to an embodiment of the present disclosure.
FIG. 2 is a view schematically showing a front portion of an unwinding device for manufacturing a secondary battery according to an embodiment of the present disclosure.
FIG. 3 is a partial enlarged view of FIG. 2.
FIG. 4 is a view showing an unwinding device for manufacturing a secondary battery according to an embodiment of the present disclosure.
FIG. 5 is a view showing the correction operation of an unwinding device for manufacturing a secondary battery according to an embodiment of the present disclosure.
FIG. 6 is a view showing the state of an electrode that has been unwound and moved by an existing unwinder.
FIG. 7 is a view showing the state of an electrode that has been unwound and moved according to the present disclosure.
FIG. 8 is a view schematically showing a first transfer roll and a transfer roll correction unit in an unwinding device for manufacturing a secondary battery according to another embodiment of the present disclosure.
FIG. 9 is a view showing the correction operation of a transfer roll correction unit in an unwinding device for manufacturing a secondary battery according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure as defined in the appended claims.

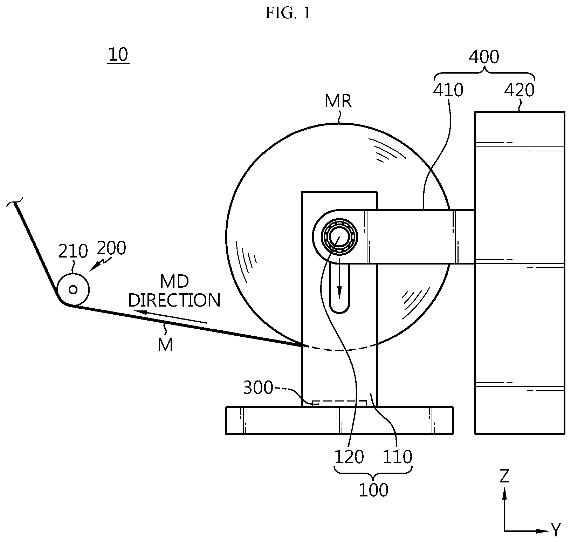

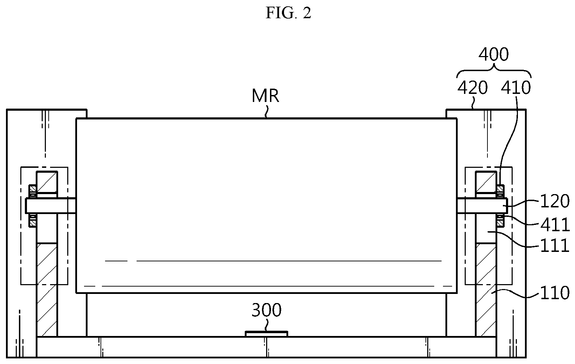

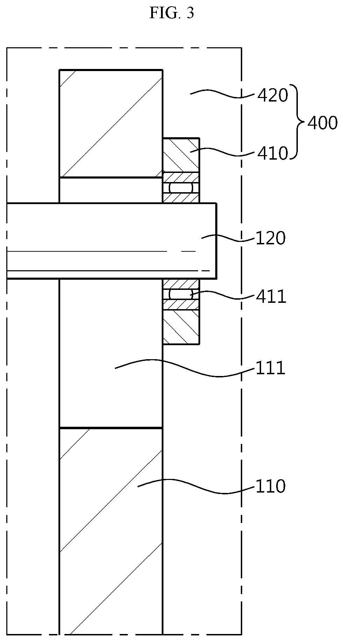

FIG. 1 is a view schematically showing a side portion of an unwinding device for manufacturing a secondary battery according to an embodiment of the present disclosure, FIG. 2 is a view schematically showing a front portion of an unwinding device for manufacturing a secondary battery according to an embodiment of the present disclosure, and FIG. 3 is a partial enlarged view of FIG. 2.

Referring to FIGS. 1 to 3, an unwinding device 10 for manufacturing a secondary battery according to an embodiment of the present disclosure may include an unwinder 100, a transfer unit 200 including a first transfer roll 210, a sensor unit 300, and a correction unit 400.

The unwinder 100 is configured to unwind the coating substrate M. The coating substrate M may be a metal foil corresponding to a current collector of an electrode, or a porous polymer substrate corresponding to an insulator of a separator. Alternatively, the coating substrate M may be an electrode or an electrode sheet where an electrode active material is applied and dried on the above-mentioned substrate. In this embodiment, it may be an electrode sheet where slitting has been completed for a notching process.

The unwinder 100 unwinds the coating substrate M wound in a roll shape by rotating it around a rotation shaft 120. Specifically, the unwinder 100 may include a support frame 110 and a rotation shaft 120 rotatably coupled to the support frame 110.

The support frame 110 may be disposed in a pair spaced apart by a predetermined width formed by the wound coating substrate M. The rotation shaft 120 may be rotatably coupled the pair of support frames 110 therebetween. A long hole 111 may be formed in the support frame 110 so that the rotation shaft 120 is moved up/down. Through the long hole 111, movement of the rotation shaft 120 in the first direction may be possible. For example, the first direction may be an upward/downward direction or a vertical direction. On the other hand, movement of the rotation shaft 120 in other directions (e.g., Y-axis direction, etc.) may be restricted by the long hole 111.

The sensor unit 300 may be disposed on this support frame 110. The sensor unit 300 may be disposed at the center of the pair of support frames 110 spaced apart by a predetermined width.

The rotation shaft 120 may be disposed on the long hole 111, and a coating substrate M produced by winding a strip-shaped secondary battery substrate may be wound on the rotation shaft 120. Here, the portion where the coating substrate M is wound is referred to as an electrode reel MR, and the electrode reel MR may be coupled to the rotation shaft 120. The coating substrate M unwound from the electrode reel MR may be transferred in the MD (Machine Direction) direction by the first transfer roll 210. For example, the electrode reel MR on which the coating substrate M where the slitting process has been performed is wound may be unwound through the unwinder 100 and transferred in the MD direction to be put in a notching process or notching equipment.

The transfer unit 200 is a part that transfers the unwound coating substrate M. To this end, the transfer unit 200 may include a plurality of transfer rolls. And, since the transfer unit 200 includes a plurality of transfer rolls, and the plurality of transfer rolls are sequentially arranged in a row, the unwound coating substrate M may be continuously unwound and then supplied to a subsequent equipment. In the drawings, only the first transfer roll 210 is shown, and the other transfer rolls are omitted.

The transfer unit 200 includes a first transfer roll 210 disposed closest to the unwinder 100. The first transfer roll 210 may be the first to come into contact with the coating substrate M unwound and released from the electrode reel MR. Depending on the position of the first transfer roll 210 relative to the rotation shaft 120 of the unwinder 100, the movement path where the unwound coating sheet moves from the electrode reel MR may vary, and the entry angle of the coating substrate M to the first transfer roll 210 may be changed.

The sensor unit 300 may be a part that senses a distance to the outer peripheral surface of the coating substrate M. The sensor unit 300 may sense the thickness of the wound coating substrate M by sensing the distance of the outer peripheral surface of the coating substrate M that changes while the coating substrate M is being unwound. That is, the sensor unit 300 may sense the thickness of the wound coating substrate M by measuring a distance to the outermost peripheral surface of the wound coating substrate M, that is, the electrode reel MR.

The correction unit 400 is provided on the rotation shaft 120 and is a part that corrects the position of the rotation shaft 120 with respect to the first transfer roll 210. The correction unit 400 may move the position of the rotation shaft 120 in the first direction (Z-axis direction) so that the entry angle of the coating substrate M formed from the first transfer roll 210 to the outer peripheral surface of the coating substrate M wound on the unwinder 100 is formed within a preset range.

That is, during the unwinding process, the thickness of the electrode reel MR is reduced, and accordingly, the movement path along which the unwound coating sheet moves from the electrode reel MR may vary, and the entry angle of the coating substrate M with respect to the first transfer roll 210 may be changed. The correction unit 400 may move the engaged rotation shaft 120 of the electrode reel MR downward in the first direction, so that the entry angle of the coating substrate M may be formed within a preset range.

Through this configuration, deformation of the coating substrate M may be minimized by reducing the change in the movement angle of the coating substrate M moving from the unwinder 100 to the first transfer roll 210.

Hereinafter, the sensor unit 300 and the correction unit 400 will be described in detail.

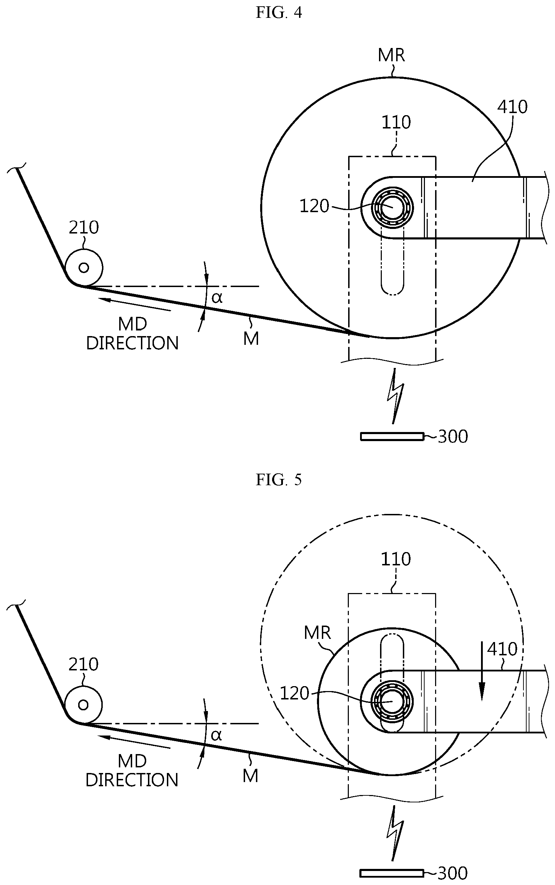

FIG. 4 is a view showing an unwinding device for manufacturing a secondary battery according to an embodiment of the present disclosure.

It is necessary to sense whether the winding amount of the coating substrate M wound on the unwinder 100 is reduced or whether the thickness of the electrode reel MR is reduced. Accordingly, a sensor unit 300 may be provided in the unwinding device 10 for manufacturing a secondary battery in this embodiment.

Referring to FIG. 3 and FIGS. 1 and 2 again, the sensor unit 300 may be provided on the support frame 110. This sensor unit 300 may be a distance sensing sensor. The sensor unit 300 may measure the time of flight (TOF) of light reflected by being irradiated to the outer peripheral surface of the wound coating substrate M, that is, the electrode reel MR. While the electrode reel MR is being unwound in the unwinder 100, it may be configured to sense the distance from a predetermined position to the outer peripheral surface of the electrode reel MR.

On the other hand, the movement angle of the coating substrate M moved between the electrode reel MR and the transfer unit 200, particularly the first transfer roll 210, changes as the radius of the electrode reel MR decreases over time. Accordingly, it is necessary to correct the rotation shaft 120 of the unwinder 100 with respect to the transfer unit 200.

The correction unit 400 may be configured to correct the position of the rotation shaft 120 that supports and rotates the electrode reel MR according to the distance sensed by the sensor unit 300.

Specifically, the correction unit 400 may include a lifting frame 410; and an up/down driving unit 420 connected to the lifting frame 410 to drive the rotation shaft 120 up/down in the first direction.

The lifting frame 410 may be configured to support the rotation shaft 120 of the unwinder 100. The lifting frame 410 may be provided with a hub bearing to which the rotation shaft 120 is rotatably coupled. Accordingly, the lifting frame 410 may rotatably support the rotation shaft 120.

This lifting frame 410 may be moved up/down in the first direction (Z-axis direction).

The up/down driving unit 420 may be a part that drives the lifting frame 410 up/down in the first direction. The up/down driving unit 420 may be configured to correct the position of the rotation shaft 120 supporting the electrode reel MR by changing the position of the lifting frame 410 in response to the amount of change in distance sensed by the sensor unit 300. The up/down driving unit 420 in this embodiment may be a pneumatic or hydraulic cylinder.

According to this embodiment, the rotation shaft 120 of the unwinder 100 with respect to the transfer unit 200 may be corrected even if the winding amount of the coating substrate M of the electrode reel MR on the unwinder 100 is reduced, thereby minimizing deformation of the coating substrate M by reducing the change in the movement angle of the coating substrate M moving from the unwinder 100 to the first transfer roll 210.

In addition, while the wound coating substrate M is being unwound, the sensor unit 300 may move the rotation shaft 120 in response to the winding amount of the coating substrate M, thereby minimizing the degree of bending formed by the discharged substrate and the coating substrate M facing toward the first transfer roll 210 from the electrode reel MR based on the first transfer roll 210, and accordingly, folding, damage, and defects of the tab during the notching process may be reduced.

Hereinafter, the correction operation of the correction unit 400 will be described in more detail.

FIG. 5 is a view showing the correction operation of an unwinding device for manufacturing a secondary battery according to an embodiment of the present disclosure.

Referring to FIG. 4 again, the electrode reel MR is engaged with the rotation shaft 120, and the unwinder 100 may unwind the electrode reel MR by rotating it around the rotation shaft 120. When the electrode reel MR is rotated around the rotation shaft 120 and unwound, the unwound coating substrate M may be transferred in the MD (Machine Direction) direction by the first transfer roll 210.

While the electrode reel MR is being unwound, the sensor unit 300 may sense the distance from a predetermined position to the outer peripheral surface of the electrode reel MR. For example, the sensor unit 300 may be disposed side by side with the rotation shaft 120 of the unwinder 100 in the Z-axis direction to sense the distance to the outer peripheral surface of the electrode reel MR.

Referring to FIG. 5, as time goes by, the radius of the electrode reel MR decreases, and the distance sensed by the sensor unit 300 increases. The time of flight (TOF) of the light reflected by being irradiated to the outer peripheral surface of the wound coating substrate is measured.

The correction unit 400 may correct the position of the rotation shaft 120 that supports and rotates the electrode reel MR according to the distance sensed by the sensor unit 300. That is, the up/down driving unit 420 of the correction unit 400 changes the position of the lifting frame 410 in response to the amount of change in distance sensed by the sensor unit 300. A slight movement of the lifting frame 410 downward by driving it in the first direction may correct the position of the rotation shaft 120. For example, the correction unit 400 may move the rotation shaft 120 in the -Z-axis direction so that the outer peripheral surface of the electrode reel MR is located within a preset range based on the Z direction in the drawing.

According to this embodiment, the rotation shaft 120 of the unwinder 100 with respect to the transfer unit 200 may be corrected even if the winding amount of the coating substrate M of the electrode reel MR on the unwinder 100 is reduced, thereby minimizing deformation of the coating substrate M by reducing the change in the movement angle of the coating substrate M moving from the unwinder 100 to the first transfer roll 210.

In addition, while the wound coating substrate M is being unwound, the sensor unit 300 may move the rotation shaft 120 in response to the winding amount of the coating substrate M, thereby minimizing the degree of bending formed by the discharged substrate and the coating substrate M facing toward the first transfer roll 210 from the electrode reel MR based on the first transfer roll 210, and accordingly, folding, damage, and defects of the tab during the notching process may be reduced.

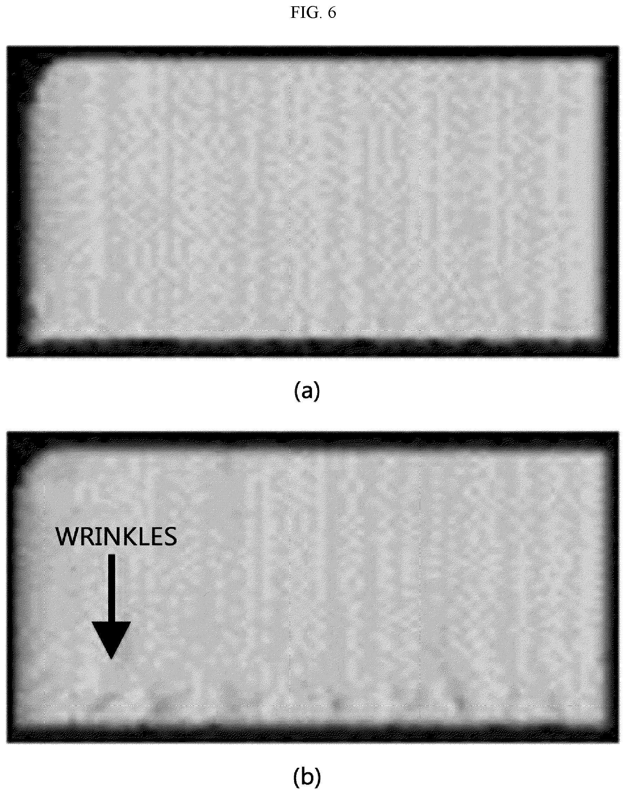

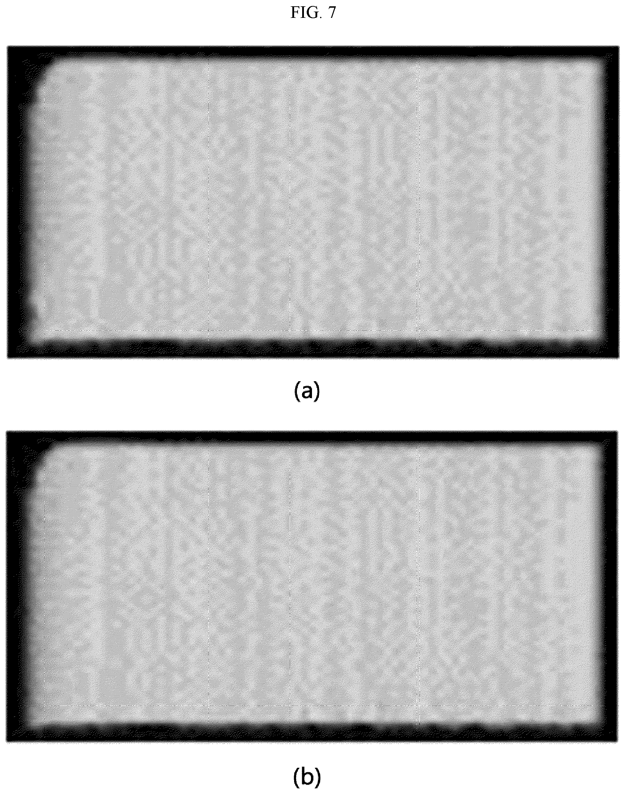

FIG. 6 is a view showing the state of an electrode that has been unwound and moved by an existing unwinder, and FIG. 7 is a view showing the state of an electrode that has been unwound and moved according to the present disclosure.

As shown in FIG. 6 (a), in the case of the electrode unwound and transferred from the electrode reel MR in which a strip-shaped electrode is wound into a roll shape at the beginning of the roll-to-roll process, the degree of bending in the first transfer roll 210 is not significant, thereby creating no wrinkles on the electrode uncoated portion.

On the other hand, as shown in FIG. 6 (b), in the case of the electrode unwound and transferred from the electrode reel MR whose radius is reduced as the roll-to-roll process proceeds, the degree of bending in the transfer roller increases, so that bending creates wrinkles on the electrode uncoated portion. As a result, it can be confirmed that the tab provided in the electrode uncoated portion is folded or damaged, which may cause a deterioration in the yield and quality of the electrode.

In the case of the electrode unwound and transferred from the electrode roll at the beginning of the roll-to-roll process, the degree of bending in the first transfer roll 210 is not significant, thereby creating no wrinkles on the electrode uncoated portion as shown in FIG. 7 (a).

In addition, even when the radius of the electrode roll decreases as the roll-to-roll process proceeds, the correction unit 400 corrects the position of the electrode reel MR by moving the height of the rotation shaft 120 in the -Z-axis direction in consideration of the reduced thickness of the electrode reel MR, and as a result of, the degree of bending of the coating substrate M in the first transfer roll 210 is maintained as initially, thereby creating no wrinkles on the electrode uncoated portion as shown in FIG. 7 (b). Accordingly, folding, damage, and defects of the tab during the notching process may be reduced.

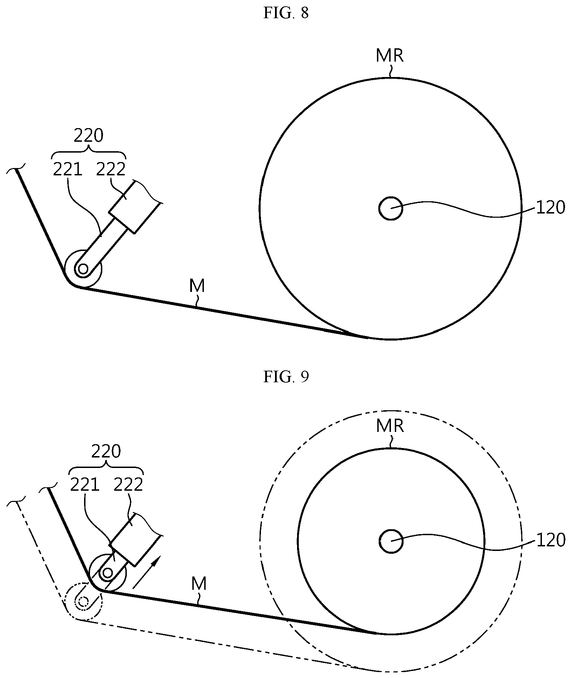

Next, other embodiments of the unwinding device for manufacturing a secondary battery of the present disclosure will be briefly described with reference to FIGS. 8 and 9.

FIG. 8 is a view schematically showing a first transfer roll and a transfer roll correction unit in an unwinding device for manufacturing a secondary battery according to another embodiment of the present disclosure, and FIG. 9 is a view showing the correction operation of a transfer roll correction unit in an unwinding device for manufacturing a secondary battery according to another embodiment of the present disclosure.

The same reference numerals as in the previous drawings indicate the same members, and redundant descriptions of the same members will be omitted and the differences from the above-described embodiment will be mainly described.

Referring to FIGS. 8 and 9, in the unwinding device for manufacturing a secondary battery according to another embodiment of the present disclosure, a transfer roll correction unit 220 may be provided in the transfer unit 200.

The transfer roll correction unit 220 may correct the position of the transfer unit 200 in the second direction. Specifically, the transfer roll correction unit 220 may include a correction rod 221 rotatably connected to the first transfer roll 210; and a rod driving unit 222 that drives the correction rod 221 forward or backward in the second direction.

The correction rod 221 may position the first transfer roll 210 in the second direction depending on the degree of expansion and contraction. And, the correction rod 221 may be driven by the rod driving unit 222. In the drawing, the correction rod 221 is contracted, thereby allowing the first transfer roll 210 to move to the upper right side. At this time, there is no movement of the rotation shaft 120.

In this way, by correcting the position of the first transfer roll 210, deformation of the coating substrate M may be minimized by reducing the change in the movement angle of the coating substrate M moving from the unwinder 100 to the first transfer roll 210.

For example, the correction unit 400 moves the rotation shaft 120 where the electrode reel MR is engaged in the first direction, and when excessive displacement of the rotation shaft 120 needs to be corrected, a burden is imposed on the correction unit 400. In addition, since the electrode reel MR itself may weigh considerably, the correction work with the correction unit 400 may be limited.

On the other hand, when the position of the first transfer roll 210 according to this embodiment may be adjusted in the second direction, deformation of the coating substrate M may be minimized by reducing the change in the movement angle of the coating substrate M moving to the first transfer roll 210 without moving the position of the rotation shaft 120. Alternatively, although not shown in the drawing, a case where a smaller displacement movement of the correction unit 400 is combined with the operation of the transfer roll correction unit 220 may also be considered. Therefore, it is possible to minimize the degree of bending formed by the coating substrate M facing toward the first transfer roll 210 from the electrode reel MR, and ultimately, folding, damage, and defects of the tab during the notching process may be reduced.

Meanwhile, a secondary battery manufacturing system according to an embodiment of the present disclosure includes the unwinding device 10 for manufacturing a secondary battery described above.

According to an embodiment, the secondary battery manufacturing system may further include one or two or more devices among a coating material manufacturing device, a coating device, a drying device, a rolling device, a slitting device, and a notching device.

The coating material manufacturing device may be configured to mix and prepare a coating material for forming an electrode active layer in which an actual electrochemical reaction occurs in the electrode.

For example, when the electrode to be manufactured is a wet electrode, the coating material manufacturing device may be configured to prepare an electrode mixture in a slurry state having fluidity as a coating material by mixing an electrode active material that is an integral element of the electrode, a conductive material and a filler that are other additives, a binder for binding between powders and adhesion to a current collector, a solvent for imparting viscosity and dispersing powders, and the like.

On the other hand, when the electrode to be manufactured is a dry electrode, the coating material mixing device may be configured to prepare an electrode mixture in a powder state as a coating material by mixing a conductive material, a filler, a binder, and the like together with an electrode active material. In this case, the secondary battery manufacturing system may not include the drying device.

The coating device may be configured to apply the coating material to an electrode foil corresponding to a current collector. When the electrode to be manufactured is a dry electrode, the coating device may include a calendering roll for calendering a coating material in a powder state to create a free-standing type electrode film, and a laminating roll for pressing and attaching the electrode film to the surface of the electrode foil.

The drying device is applied when the electrode to be manufactured is a wet electrode, and it may be configured to dry the coating material applied to the electrode foil. When the electrode to be manufactured is a dry electrode, the drying device may be omitted.

The rolling device may be configured to control the thickness of the coating layer by performing a roll pressing process on the electrode where the coating layer is formed.

The slitting device may be configured to slit the coated electrode.

The notching device may be configured to form a notch in the uncoated portion of the slit electrode.

As described above, according to the present disclosure, the distance sensor senses the distance from a predetermined position to the outer peripheral surface of the wound substrate while the wound substrate is being unwound, and the correction unit 400 corrects the position of the rotation shaft 120 according to the distance sensed by the distance sensor, thereby enabling to provide an unwinding device 10 for manufacturing a secondary battery that may maintain the movement angle of a portion of the substrate that is unwound and moved within a certain range even when the radius decreases as the substrate wound in a roll shape is unwound in the roll-to-roll process for manufacturing a secondary battery, and may prevent deformation of the substrate due to a change in the movement angle, and a secondary battery manufacturing system including the same.

Meanwhile, the terms indicating directions as used herein such as upper, lower, left, right, front, and rear are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious to those skilled in the art that a variety of modifications and changes may be made thereto within the technical aspects as defined by the scope of the appended claims.

The description of the present disclosure and the accompanying drawings for illustrating embodiments thereof may be shown in a somewhat exaggerated form to emphasize or highlight the technical content of the present disclosure, but it should be interpreted as obvious that various types of modified application examples may be possible at the level of a person of ordinary skill in the art in view of the foregoing description and the matters shown in the drawings.

## Claims

1. An unwinding device (10) for manufacturing a secondary battery, comprising:
an unwinder (100) unwinding a coating substrate (M) wound in a roll shape by rotating it around a rotation shaft (120);
a transfer unit (200) comprising a first transfer roll (210) disposed closest to the unwinder (100); and
a correction unit (400) provided on the rotation shaft (120) and correcting the position of the rotation shaft (120) with respect to the first transfer roll (210).

2. The unwinding device (10) for manufacturing a secondary battery according to claim 1,
wherein the correction unit (400) moves the position of the rotation shaft (120) in the first direction so that the entry angle of the coating substrate (M) formed from the first transfer roll (210) to the outer peripheral surface of the coating substrate (M) wound on the unwinder (100) is formed within a preset range.

3. The unwinding device (10) for manufacturing a secondary battery according to claim 2, further comprising
a sensor unit (300) sensing the distance to the outer peripheral surface of the electrode reel (MR), which is the wound coating substrate (M).

4. The unwinding device (10) for manufacturing a secondary battery according to claim 3,
wherein the sensor unit (300) senses the thickness of the wound coating substrate (M) by sensing the distance of the outer peripheral surface of the electrode reel (MR) that changes while the coating substrate (M) is being unwound.

5. The unwinding device (10) for manufacturing a secondary battery according to claim 3,
wherein the correction unit (400) further comprises:
a lifting frame (410); and
an up/down driving unit (420) connected to the lifting frame (410) to drive the rotation shaft (120) up/down in the first direction.

6. The unwinding device (10) for manufacturing a secondary battery according to claim 5,
wherein the lifting frame (410) is provided with a hub bearing to which the rotation shaft (120) is rotatably coupled.

7. The unwinding device (10) for manufacturing a secondary battery according to claim 3,
wherein the unwinder (100) further comprises a support frame (110), and
a long hole is formed in the support frame (110) so that the rotation shaft (120) is moved up/down.

8. The unwinding device (10) for manufacturing a secondary battery according to claim 7,
wherein the sensor unit (300) is provided in the support frame (110).

9. The unwinding device (10) for manufacturing a secondary battery according to claim 3,
wherein the sensor unit (300) measures the time of flight of the light reflected by being irradiated to the outer peripheral surface of the electrode reel (MR).

10. The unwinding device (10) for manufacturing a secondary battery according to claim 5,
wherein the up/down driving unit (420) is a pneumatic or hydraulic cylinder.

11. The unwinding device (10) for manufacturing a secondary battery according to claim 1, further comprising
a transfer roll correction unit (220) that corrects the position of the transfer unit (200) in the second direction.

12. The unwinding device (10) for manufacturing a secondary battery according to claim 11,
wherein the transfer roll correction unit (220) comprises:
a correction rod (221) rotatably connected to the first transfer roll (210); and
a rod driving unit (222) that drives the correction rod forward or backward in the second direction.

13. A secondary battery manufacturing system comprising an unwinding device (10) for manufacturing a secondary battery according to any one of claims 1 to 12.

## Patentansprüche

1. Abwickelvorrichtung (10) zum Herstellen einer Sekundärbatterie aufweisend:
einen Abwickler (100), der ein Beschichtungssubstrat (M), das in einer Rollenform gewickelt ist, durch Drehen um eine Drehwelle (120) abwickelt;
eine Transfereinheit (200), die eine erste Transferrolle (210) aufweist, die dem Abwickler (100) am nächsten angeordnet ist; und
eine Korrektureinheit (400), die auf der Drehwelle (120) bereitgestellt ist und die Position der Drehwelle (120) bezüglich der ersten Transferrolle (210) korrigiert.

2. Abwickelvorrichtung (10) zum Herstellen einer Sekundärbatterie nach Anspruch 1,
wobei die Korrektureinheit (400) die Position der Drehwelle (120) in der ersten Richtung bewegt, so dass der Eintrittswinkel des Beschichtungssubstrats (M), das von der ersten Transferrolle (210) zu der Außenumfangsfläche des auf den Abwickler (100) gewickelten Beschichtungssubstrats (M) gebildet ist, innerhalb eines voreingestellten Bereichs gebildet wird.

3. Abwickelvorrichtung (10) zum Herstellen einer Sekundärbatterie nach Anspruch 2, ferner aufweisend
eine Sensoreinheit (300), die den Abstand zu der Außenumfangsfläche der Elektrodenspule (MR) erfasst, die das gewickelte Beschichtungssubstrat (M) ist.

4. Abwickelvorrichtung (10) zum Herstellen einer Sekundärbatterie nach Anspruch 3,
wobei die Sensoreinheit (300) die Dicke des gewickelten Beschichtungssubstrats (M) durch Erfassen des Abstands der Außenumfangsfläche der Elektrodenspule (MR) erfasst, der sich ändert, während das Beschichtungssubstrat (M) abgewickelt wird.

5. Abwickelvorrichtung (10) zum Herstellen einer Sekundärbatterie nach Anspruch 3,
wobei die Korrektureinheit (400) ferner aufweist:
einen Heberahmen (410); und
eine Auf-/Abwärts-Antriebseinheit (420), die mit dem Heberahmen (410) verbunden ist, um die Drehwelle (120) in der ersten Richtung auf- oder abwärts anzutreiben.

6. Abwickelvorrichtung (10) zum Herstellen einer Sekundärbatterie nach Anspruch 5,
wobei der Heberahmen (410) mit einem Nabenlager versehen ist, mit dem die Drehwelle (120) drehbar gekoppelt ist.

7. Abwickelvorrichtung (10) zum Herstellen einer Sekundärbatterie nach Anspruch 3,
wobei der Abwickler (100) ferner einen Stützrahmen (110) aufweist, und
ein Langloch in dem Stützrahmen (110) ausgebildet ist, so dass die Drehwelle (120) aufoder abwärts bewegt wird.

8. Abwickelvorrichtung (10) zum Herstellen einer Sekundärbatterie nach Anspruch 7,
wobei die Sensoreinheit (300) in dem Stützrahmen (110) vorgesehen ist.

9. Abwickelvorrichtung (10) zum Herstellen einer Sekundärbatterie nach Anspruch 3,
wobei die Sensoreinheit (300) die Laufzeit des Lichts misst, das reflektiert wird, indem es auf die Außenumfangsfläche der Elektrodenspule (MR) gestrahlt wird.

10. Abwickelvorrichtung (10) zum Herstellen einer Sekundärbatterie nach Anspruch 5,
wobei die Auf-/Abwärts-Antriebseinheit (420) ein pneumatischer oder hydraulischer Zylinder ist.

11. Abwickelvorrichtung (10) zum Herstellen einer Sekundärbatterie nach Anspruch 1, ferner aufweisend
eine Transferrollen-Korrektureinheit (220), die die Position der Transfereinheit (200) in der zweiten Richtung korrigiert.

12. Abwickelvorrichtung (10) zum Herstellen einer Sekundärbatterie nach Anspruch 11,
wobei die Transferrollen-Korrektureinheit (220) aufweist:
eine Korrekturstange (221), die drehbar mit der ersten Transferrolle (210) verbunden ist; und
eine Stangenantriebseinheit (222), die die Korrekturstange in der zweiten Richtung vorwärts oder rückwärts antreibt.

13. Sekundärbatterie-Herstellungssystem aufweisend eine Abwickelvorrichtung (10) zum Herstellen einer Sekundärbatterie nach einem der Ansprüche 1 bis 12.

## Revendications

1. Dispositif de déroulement (10) pour la fabrication d'une batterie secondaire, comprenant :
un dérouleur (100) qui déroule un substrat de revêtement (M) enroulé sous forme de rouleau en le faisant tourner autour d'un arbre de rotation (120) ;
une unité de transfert (200) comprenant un premier rouleau de transfert (210) disposé au plus près du dérouleur (100) ; et
une unité de correction (400) prévue sur l'arbre de rotation (120) et corrigeant la position de l'arbre de rotation (120) par rapport au premier rouleau de transfert (210).

2. Dispositif de déroulement (10) pour la fabrication d'une batterie secondaire selon la revendication 1,
dans lequel l'unité de correction (400) déplace la position de l'arbre de rotation (120) dans la première direction de sorte que l'angle d'entrée du substrat de revêtement (M), formé à partir du premier rouleau de transfert (210) jusqu'à la surface périphérique externe du substrat de revêtement (M) enroulé sur le dérouleur (100), soit formé au sein d'une plage préréglée.

3. Dispositif de déroulement (10) pour la fabrication d'une batterie secondaire selon la revendication 2, comprenant en outre
une unité de capteur (300) qui capte la distance jusqu'à la surface périphérique externe de la bobine d'électrode (MR), qui est le substrat de revêtement enroulé (M).

4. Dispositif de déroulement (10) pour la fabrication d'une batterie secondaire selon la revendication 3,
dans lequel l'unité de capteur (300) capte l'épaisseur du substrat de revêtement enroulé (M) grâce au captage de la distance de la surface périphérique externe de la bobine d'électrode (MR) qui change pendant que le substrat de revêtement (M) est en train d'être déroulé.

5. Dispositif de déroulement (10) pour la fabrication d'une batterie secondaire selon la revendication 3,
dans lequel l'unité de correction (400) comprend en outre :
un cadre de levage (410) ; et
une unité d'entraînement vers le haut/vers le bas (420) raccordée au cadre de levage (410) pour entraîner l'arbre de rotation (120) vers le haut/vers le bas dans la première direction.

6. Dispositif de déroulement (10) pour la fabrication d'une batterie secondaire selon la revendication 5,
dans lequel le cadre de levage (410) est pourvu d'un palier de moyeu auquel l'arbre de rotation (120) est couplé de manière rotative.

7. Dispositif de déroulement (10) pour la fabrication d'une batterie secondaire selon la revendication 3,
dans lequel le dérouleur (100) comprend en outre un cadre de support (110), et
un trou long est formé dans le cadre de support (110) de sorte que l'arbre de rotation (120) est déplacé vers le haut/vers le bas.

8. Dispositif de déroulement (10) pour la fabrication d'une batterie secondaire selon la revendication 7,
dans lequel l'unité de capteur (300) est prévue dans le cadre de support (110).

9. Dispositif de déroulement (10) pour la fabrication d'une batterie secondaire selon la revendication 3,
dans lequel l'unité de capteur (300) mesure le temps de propagation de la lumière réfléchie du fait qu'elle est irradiée vers la surface périphérique externe de la bobine d'électrode (MR).

10. Dispositif de déroulement (10) pour la fabrication d'une batterie secondaire selon la revendication 5,
dans lequel l'unité d'entraînement vers le haut/vers le bas (420) est un cylindre pneumatique ou hydraulique.

11. Dispositif de déroulement (10) pour la fabrication d'une batterie secondaire selon la revendication 1, comprenant en outre
une unité de correction de rouleau de transfert (220) qui corrige la position de l'unité de transfert (200) dans la deuxième direction.

12. Dispositif de déroulement (10) pour la fabrication d'une batterie secondaire selon la revendication 11,
dans lequel l'unité de correction de rouleau de transfert (220) comprend :
une tige de correction (221) raccordée de manière rotative au premier rouleau de transfert (210) ; et
une unité d'entraînement de tige (222) qui entraîne la tige de correction vers l'avant ou vers l'arrière dans la deuxième direction.

13. Système de fabrication de batterie secondaire comprenant un dispositif de déroulement (10) pour la fabrication d'une batterie secondaire selon n'importe laquelle des revendications 1 à 12.
